# EUROPÄISCHE PATENTSCHRIFT

(11) **EP 1 009 509 B1**
(45) Veröffentlichungstag und Bekanntmachung des Hinweises auf die Patenterteilung: **16.01.2002**
(21) Anmeldenummer: 98941420.6
(22) Anmeldetag: 14.08.1998
(51) Int. Cl.: B01D 19/02, B01D 3/38

(54) **VERFAHREN ZUR REDUZIERUNG DER SCHAUMBILDUNG BEIM BEHANDELN EINER DISPERSION ODER FLÜSSIGKEIT MIT WASSERDAMPF**
METHOD FOR REDUCING THE FORMATION OF FOAM DURING THE TREATMENT OF A DISPERSION OR A LIQUID WITH WATER VAPOUR
PROCEDE DE REDUCTION DE LA FORMATION DE MOUSSE LORS DU TRAITEMENT A LA VAPEUR D'UNE DISPERSION OU D'UN LIQUIDE

(30) Priorität: 18.08.1997 DE 19735739
(43) Veröffentlichungstag der Anmeldung: 21.06.2000
(73) Patentinhaber: BASF AKTIENGESELLSCHAFT, 67056 Ludwigshafen (DE)
(72) Erfinder: HÜBINGER, Wolfgang, D-67117 Limburgerhof (DE); HOLTRUP, Walter, D-67227 Frankenthal (DE); HEIDER, Wolfgang, D-67434 Neustadt (DE)
(74) Vertreter: Isenbruck, Günter, Dr.
(86) Internationale Anmeldenummer: EP9805172
(87) Internationale Veröffentlichungsnummer: WO9908769

(56) Entgegenhaltungen:
- FR-A- 985 434
- US-A- 3 930 931
- US-A- 4 090 922

## Beschreibung

Die Erfindung betrifft ein Verfahren zur Reduzierung der Schaumbildung beim Behandeln einer Dispersion oder Flüssigkeit mit Wasserdampf nach Auspruch 1.

Bei der Emulsionspolymerisation von ungesättigten Verbindungen wird im allgemeinen nicht bis zum quantitativen Umsatz der Monomeren auspolymerisiert. Vielfach wird auch die Polymerisation bewußt bei einem niedrigeren Umsatz abgebrochen. In allen Fällen verbleiben in den Dispersionen neben den restlichen Mengen an Monomeren die Begleitstoffe der verwendeten Monomere und der Hilfsstoffe, zum Beispiel der verwendeten Emulgatoren, sowie die niedrig-molekularen Nebenprodukte, die während der Polymerisation entstehen. Diese unerwünschten flüchtigen organischen Komponenten, die im Produkt verbleiben, werden im folgenden mit dem Sammelbegriff "Restflüchtige" bezeichnet. In der Entscheidung der Kommission 96/13/EG zur Festlegung von Umweltkriterien für die Vergabe des EG-Umweltzeichens bei Innenfarben und -lacken vom 15. Dezember 1995 werden diese Restfiüchtigen in flüchtige organische Verbindungen (VOC) und flüchtige aromatische Kohlenwasserstoffe aufgeteilt. In beiden Fällen handelt es sich um organische Verbindungen mit einem Siedepunkt (oder Siedebeginn) von höchstens 250°C bei normalen Druckbedingungen. Die flüchtigen aromatischen Kohlenwasserstoffe weisen dabei mindestens einen aromatischen Kern in der Strukturformel auf. Der hier verwendete Sammelbegriff "Restflüchtige" bezeichnet als derartigen organischen Verbindungen mit einem Siedepunkt (oder Siedebeginn) von höchstens 250°C.

Neben Dispersionen können auch Flüssigkeiten Restflüchtige enthalten. Beispielsweise verbleibt beim Brechen einer durch Emulsionspolyrnerisation gebildeten Dispersion mit einem Elektrolyten oder mit Säure zumindest ein Teil der Restflüchtigen in der Flüssigkeit zurück, die sich von dem Polymerisat abscheidet. Die Restflüchtigen können bei einer umweltgerechten Entsorgung solcher Flüssigkeiten problematisch sein. Außerdem sind Restflüchtige bei vielen Anwendungen von Dispersionen oder Suspensionen, so zum Beispiel im Lebensmittel- oder im Kosmetikbereich oder bei Innenraumanwendungen unerwünscht, und man ist bestrebt, diese möglichst vollständig zu entfernen.

Dispersionen oder Flüssigkeiten werden daher einer Behandlung unterzogen, die die Restflüchtigen entfernt. Diese Behandlung wird als Desodorierung bezeichnet. Dazu sind verschiedene Verfahren und Vorrichtungen bekannt. Neben chemischen Verfahren, die jedoch meist nur die ungesättigten Verbindungen beeinflussen, sind dies überwiegend Strippverfahren, bei denen ein Strippgas durch die Flüssigkeit oder Dispersion geleitet wird. Es ist seit langem bekannt, Restflüchtige dadurch zu entfernen, daß man durch die vorgelegten erhitzten Dispersionen oder Flüssigkeiten Wasserdampf hindurchleitet. Die Durchführung dieser Wasserdampfbehandlung macht bei vielen Polymerdispersionen besonders bei solchen mit einer Oberflächenspannung unter 40 dyn/cm, wegen ihres Gehaltes an Emulgatoren, die ein starkes Schäumen der Dispersion hervorrufen, große Schwierigkeiten. Die unter anderem von Art und Konzentration der enthaltenen Emulgatoren und sonstigen Polymerisationshilfsmitteln, von Art und Menge der enthaltenden Monomeren sowie von der Teilchengröße der Polymerisate abhängige, im allgemeinen große Schaummenge macht das Verfahren langsam, mühsam und oft undurchführbar. Durch Zusatz bestimmter Antischaummittel, wie komplexen Alkaliphosphaten in Kombination mit Salzen mehrwertiger Metalle, läßt sich zwar eine Verringerung des Schäumens erzielen, doch ist der Zusatz solcher Antischaummittel im Hinblick auf die Stabilität und die anwendungstechnischen Eigenschaften der Dispersionen oft unerwünscht. Aus diesem Grund wird meist auf den Zusatz von Antischaummitteln verzichtet. Stattdessen wird beispielsweise ein Dampf-Dispersionsschaum-Gemisch bei hoher Strömungsgeschwindigkeit einem raschen Druckabfall unterworfen. Zur Schaumvernichtung lassen sich hierbei ein oder mehrere düsenförmige Rohrquerschnittsverengungen und Prall- und Umlenkbleche oder ähnlich wirkende Einbauten in den Wegen des Dampf-Dispersionsschaum-Gemisches benutzen. In der bevorzugten Ausführungsform wird das Dampf-Dispersionsschaum-Gemisch in hoher Geschwindigkeit nach Durchtritt durch eine Düse tangential in einen evakuierten Abscheider eingeführt.

Die bei den erfindungsgemäßen Verfahren bevorzugt eingesetzten Flüssigkeiten oder Dispersionen sollen im folgenden aufgerührt werden:

### Flüssigkeiten

Die im erfindungsgemäßen Verfahren eingesetzten Flüssigkeiten können beliebige Flüssigkeiten mit entfernbarem Gehalt an Restflüchtigen sein. Vorzugsweise werden wäßrige Lösungen oder Flüssigkeiten mit Neigung zur Schaumbildung eingesetzt. Beispiele derartiger Flüssigkeiten können Lösungen sein, die nach Abtrennung des Polymerisats aus Suspensions- oder Emulsionspolymerisaten hervorgehen oder sonstige schaumbildende Flüssigkeiten, die unerwünschte flüchtige Komponenten enthalten, insbesondere dann, wenn diese als Lösungsmittel dienen. Als weitere Beispiele können Polymerlösungen, insbesondere wäßrige Polymerlösungen, aufgeführt werden. Diese enthalten nach der Herstellung im entsprechenden Lösungmittel häufig noch Restmonomere und andere Komponenten, die durch Desodorierung entfernt werden können.

### Dispersionen

Die im erfindungsgemäßen Verfahren eingesetzten Dispersionen können beliebige Dispersionen sein, die entfernbaren Gehalte an Restflüchtigen aufweisen. Beispiele derartiger Dispersionen können Dispersionen von kontaminierten Erdböden, Dispersionen von anorganischen Teilchen, Dispersionen von Biomolekülen und vorzugsweise Dispersionen von organischen Verbindungen, insbesondere Polymerdispersionen sein. Die Dispersionen sind dabei vorzugsweise wäßrige Dispersionen.

Bei typischen Verfahren zur Desodorierung wird die Dispersion oder Flüssigleit dem Kopf einer Kolonne zugeführt, während im unteren Bereich der Kolonne Wasserdampf eingeleitet wird. Die zu desodorierende Dispersion oder Flüssigkeit durchläuft im Gegenstrom zum Wasserdampf die Kolonne. Bei einer solchen Gegenstromkolonne ist der Druck im Kopf gegenüber dem am Boden reduziert. Bei der Desodorierung von wäßrigen Dispersionen (insbesondere Polymerdispersionen) in Desodorierkolonnen in deren Kolonnenkopf ein Vakuum erzeugt wird, schäumt die zu desodorierende Dispersion auf. Dies führt sehr schnell zu einem kompletten Zuschäumen des Kolonnenkopfs. Wenn der Kolonnenkopf voll Schaum ist, wird der Schaum durch den Stripdampf in den nachfolgenden Kondensator mitgerissen. Da dies nicht gleichmäßig, sondern schallweise erfolgt, kommt es zu Druckschwankungen im Kolonnenkopf und schließlich in der gesamten Kolonne. Dies stört den stationären Betrieb der Kolonne. Durch die Druckschwankungen kommt es einerseits zu Rückvermischungen in der Kolonne bis zum Abregnen der Böden. Dies reduziert den Wirkungsgrad der Kolonnen erheblich. Bei starkem Schäumen kann außerdem Produkt in den Kondensator gelangen und dort über den Austrag ins Abwasser verloren gehen. Gelangt Produkt in den Kondensator, wird es meist auch weiter in die Vakuumpumpe gesaugt und durch diese in das Abgassystem geführt. Dies kann bei wiederholtem Auftreten bis zur Zerstörung der Vakuumpumpe und Verstopfung der Abgasleitungen führen. Beides verursacht Anlagenstillstände mit entsprechenden Umsatzverlusten.

Zur Vermeidung des Zuschäumens von Kondensator und Vakuumsystem ist es bekannt, zwischen Kolonnenkopf und Kondensator einen Schaumabscheider mit Schaumzerstörung mittels Drucksprung einzubauen (DE 12 48 943). Diese Schaumzerstörung mittels Drucksprung benötigt eine ausreichende Druckdifferenz zwischen Kolonnenkopf und Schaumabscheider. Bei stabiler, starker Schaumentwicklung, wie sie bei der Umlaufdesodorierung üblich ist, bringt dieses System in der Regel gute Ergebnisse. Wenn jedoch, wie dies bei Desodorierkolonnen der Fall ist, mit einem schwallartigen Anfall von Schaum sowie mit Druckschwankungen im System zu rechnen ist, wird häufig eine für die zuverlässige Schaumzerstörung notwendige Druckdifferenz nicht erreicht. Als Folge dessen arbeitet die Schaumzerstörung nicht zuverlässig. Dies bringt die vorbeschriebenen Nachteile mit sich. Diese Nachteile konnten bisher auch durch einen großen und damit teuren Schaumabscheider als zusätzlichem Apparat nicht überwunden werden.

Die FR-A-985434 beschreibt die Schaumzerstörung durch Wärme- und Dampfeinwirkung.

Der Erfindung lag die Aufgabe zugrunde, das vorstehend beschriebene Verfahren so zu verbessern, daß bei der Einspeisung von schaumbildenden Dispersionen oder Flüssigkeiten in den Kopf einer Desodorierkolonne die Schaumbildung reduziert wird.

Die Lösung der Aufgabe geht aus von dem Verfahren zur Reduzierung der Schaumbildung beim Behandeln einer Dispersion oder Flüssigkeit mit Wasserdampf durch
a) Einleitung von Wasserdampf in den unteren Bereich einer Kolonne und gleichzeitiges Einspeisen eines Mediums am Kopf der Kolonne, wobei der Wasserdampf zum Kopf der Kolonne aufsteigt,
b) Kontaktieren des Mediums mit dem Wasserdampf unter Schaumbildung.

Das erfindungsgemäße Verfahren ist dadurch gekennzeichnet, daß das in Stufe a) eingespeiste Medium durch Mischen der Dispersion oder Flüssigkeit mit Wasserdampf in einer Apparatur erzeugt wurde, wobei dieses bei der Einspeisung in den Kopf der Kolonne eine höhere Temperatur aufweist, als die Temperatur des Wasserdampfs, der in Stufe b) mit dem Medium in Kontakt tritt.

Überraschend wurde gefunden, daß die Reduzierung der im Kopf der Kolonne anfallenden Schaummenge durch die direkte Dampfeinleitung in den der Kolonne zugeführten Dispersionsstrom oder Flüssigkeitsstrom erreicht wird. Genauere Untersuchungen ergaben, daß die Dispersion oder Flüssigkeit bei der Aufgabe auf den Kolonnenkopf besonders stark schäumt, wenn sie kälter ist als die sich zum Kolonnendruck einstellende Wasserdampftemperatur am Kolonnenkopf. Das Schäumen kann in der Regel erst dadurch ausreichend reduziert werden, wenn erfindungsgemäß in die Dispersion oder Flüssigkeit genügend heißer Direkt-Dampf eingeleitet wird, um das Medium, die Dispersions-Wasserdampf-Mischung oder Flüssigkeits-Wasserdampf-Mischung, die in den Kolonnenkopf eingeleitet wird, hinreichend zu erwärmen (d.h. über die Temperatur des Wasserdampfs am Kolonnenkopf). Dies wird gemäß der Erfindung mittels einer Düse erreicht, die in das senkrecht stehende Einlaufrohr zum Kolonnenkopf in ausreichendem Abstand zu diesem Dampf in die Dispersion oder Flüssigkeit eingeleitet wird. Hierfür wird vorzugsweise eine Ringspaltdüse eingesetzt. Damit sich dieser Dampf gleichmäßig in der Dispersion oder Flüssigkeit verteilt und diese aufwärmt, sind in das Rohr auf dem Weg bis zur Einleitung in den Kolonnenkopf horizontale Platten mit großen Öffnungen als Dampfverteiler vorgesehen. Danach wird durch mindestens eine Platte mit einer Öffnung als Stauscheibe ein Staudruck aufgebaut. Die Stauscheibe kann auch durch ein Membranventil als einstellbare Drossel ersetzt oder ergänzt werden.

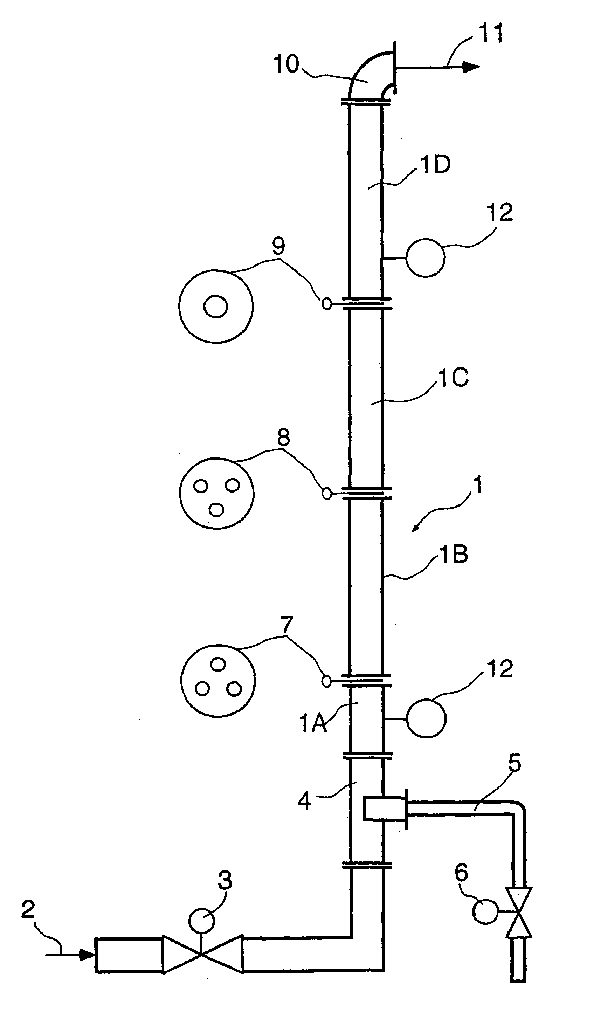

Weitere Einzelheiten und Vorteile der Erfindung können den anhand der Zeichnung beschriebenen Ausführungsbeispielen entnommen werden.

In das in der Zeichnung dargestellte und allgemein mit 1 bezeichnete Rohr strömt in der durch den Pfeil 2 bezeichneten Richtung eine Dispersion in das durch ein Ventil 3 absperrbare Rohr ein. In dieses ist ein Injektor 4 eingesetzt, durch den über eine mit einem Ventil 6 versehene Leitung 5 Wasserdampf zugeführt wird. Das Rohr 1 ist in mehrere Abschnitte 1A bis 1D unterteilt, zwischen die Lochscheiben eingesetzt sind. Die in Strömungsrichtung erste Lochscheibe 7 und die mit Abstand nach dieser angeordnete zweite Lochscheibe 8 dienen als Dampfverteiler. Die dritte Lochscheibe 9 dient als Stauscheibe. Mit dem Krümmer 10 ist das Rohr 1 an eine (nicht dargestellte) Desodorierkolonne angeschlossen, in die die Dispersion in der durch den Pfeil 11 angegebenen Richtung einströmt.

### Ausführungsbeispiel 1

Bei einer Apparatur wurde als Rohr 1 ein Rohr DN 100 verwendet. Der Abschnitt 1A war 100 mm, die Abschnitte 1B, 1C, je 250 mm lang. Das anschließende Rohr 1D hatte aufgrund der Größe der anschließenden Kolonne eine Länge von 5 m. Die Lochscheiben hatten eine Dicke von 3 mm. Die Lochscheiben 7 und 8 hatten je 3 Bohrungen mit einem Durchmesser von je 40 mm. Die Lochscheibe 9 hatte eine einzige Bohrung mit einem Durchmesser von 60 mm. Durch die Leitung 2 wurden 10 t/h Dispersionsflüssigkeit zugeführt. Zur Einleitung des Dampfes über die Leitung 5 wurde eine Ringspaltdüse DN 100/50 für die Einleitung von bis zu 500 kg/h Dampf verwendet. Die Druckdifferenz betrug 2,5 bar. Der mit den Anzeigern 12 gemessene Staudruck betrug ca. 0,5 bar.

### Ausführungsbeispiel 2

In das senkrechte, von ursprünglich DN 50 auf DN 100 erweiterte Rohr 1 zu einer Desodorierkolonne für 6 t/h Dispersionsdurchsatz wurde eine Ringspaltdüse DN 80/25 als Dampfeinleitdüse für bis zu 500 kg/h Dampf eingebaut. Zur Dampfeinmischung in die Dispersion wurden im Abstand von 250 mm drei Stauscheiben eingebaut. Die ersten beiden Scheiben 7 und 8 hatten je 3 Bohrungen mit einem Durchmesser von je 30 mm. Die Scheibe 9 hatte eine Bohrung mit einem Durchmesser von 40 mm. Für eine noch bessere Dampfkondensation in die Dispersion wurde der Dispersionsstrom zuerst mit einer weiteren Blende, die viskositätsabhängig Durchmesser zwischen 16 und 24 mm aufwies, und später mit einem Membranventil zur variablen Einstellbarkeit angedrosselt.

### Betriebsbedingungen

### Dispersion 1

### Anwendungsbeispiel 1

Eine hoch-feststoffhaltige, mittelviskose (ca. 500 mPas), wenig schäumende Klebstoffdispersion (ACRONAL V 210® ; der BASF AG) wurde mit 53 - 55 °C in einen nur schwach (auf 320 mbar) evakuierten, liegenden Abscheidebehälter (6,3 m³ Volumen) mit einer Rate von 3 t/h aufgegeben, um flüchtige Verunreinigungen abzuziehen. Das Produkt schäumte den Behälter in weniger als 1 min vollständig zu. Auch die Reduzierung des Dispersionsstromes auf 1,5 t/h schaffte keine Abhilfe. Erst die Verbesserung des Vakuums auf 100 mbar (entspr. einem Wasserdampfdruck bei 46 °C) reduzierte den Schaum, so daß das Produkt mit dem halben des normalen Durchsatzes gereinigt werden konnte.

Es sollte jedoch die Beibehaltung eines Durchsatzes von 3 t/h Dispersion erreicht werden. Dies ist aufgrund der höheren Gasgeschwindigkeit bei besserem Vakuum strömungsdynamisch nicht möglich. Bei schwächerem Vakuum hingegen kann der Prozeß aufgrund der Schaumentwicklung nicht durchgeführt werden.

Versuchsweise wurde eine neue Dampfeinleitvorrichtung im Produktstrom installiert und zur Aufheizung der Dispersion benutzt. Bereits die Eindosierung von nur 100 kg/h Dampf reichte aus, um das Produkt völlig schaumfrei mit 3 t/h (fluiddynamische Grenze) auf den Abscheidebehälter zu dosieren.

100 kg Dampf bewirkt bei 3 t Dispersion eine Aufwärmung um etwa 28 K, d.h. auf eine Temperatur oberhalb der Siedetemperatur von Wasser beim Behälterdruck von 320 mbar. Dies sind 71 °C.

### Anwendungsbeispiel 2

Die Dispersion (ACRONAL V 210® ) sollte zur besseren Entfernung der Leichtsieder auf eine Desodorierkolonne aufgegeben werden. Die technische Ausführung war wie oben beschrieben bzw. in der Zeichnung dargestellt. Das Produkt wurde mit einer Rate von 10 t/h und einer Temperatur von 60 °C auf die Kolonne (300 mbar/70 °C) aufgegeben und schäumte den Kolonnenkopf innerhalb weniger Minuten vollständig zu, so daß der Prozeß abgebrochen werden mußte. Durch Eindosierung von 300 kg/h Dampf in den Produktstrom konnte das Schäumen vollständig unterbunden werden. Der Dampfstrom entsprach einer Produktaufheizung um 25 K.

### Dispersion 2

### Anwendungsbeispiel 3

Eine Klebstoffdispersion mit mittlerem Feststoffgehalt, niedriger Viskosität und normalem Schäumverhalten (Acronal A 323® ) sollte in einer Desodorierkolonne gestrippt werden. Dazu wurde das etwa 60 °C warme Produkt auf die Kolonne (400 mbar bzw. 79 °C) mit 6t/h aufgegeben. Das Produkt schäumte den kleineren Kolonnenkopf innerhalb von 30 Sekunden zu. Der Prozeß mußte abgebrochen werden.

Die gleiche Versuchseinstellung, nur mit Einmischung von 200 kg/h Direkt-dampf zur Dispersionsvorwärmung um 25 K mit einer kleineren Dampfeinmischstrecke DN 80, sowie mit Stauscheiben mit Bohrungen 3*40 und 1*25 mm konnte problemlos, mit wenig Schaum auf dem ersten Kolonnenboden (<10 cm Schaumschicht) betrieben werden.

### Dispersion 3

### Anwendungsbeispiel 4

Eine stark schäumende, niedrigviskose Dispersion zur Bindung von Faservliesen (ACRONAL S 888 S® ; der BASF AG) wurde über die gleiche Kolonne wie die Dispersion 2 gestrippt. Die Produktlaufzeit betrug 4 t/h. Die ursprüngliche Zulauftemperatur von 57 °C wurde durch 200 kg/h Direktdampf auf gemessene 85 °C angehoben. Der Differenzdruck über die Kolonne betrug 65 mbar. Wenn die Direktdampfeinleitung abgestellt wurde, sank die Produktzulauftemperatur innerhalb von 2 min auf 77 °C (Kolonnenkopftemperatur 74 °C) und das Produkt schäumte auf. Der Differenzdruck über die Kolonne stieg auf 120 mbar und mehr.

Um ein Abbrechen des Kolonnenbetriebes zu vermeiden, wurde der Direktdampfstrom von 200 kg/h wieder eingeschaltet. Das System stabilisierte sich innerhalb weniger Minuten auf die vorherigen Werte mit wenig Schaum im Kolonnenkopf. Der Differenzdruck betrug 65 mbar, die Zulauftemperatur 85 °C.

## Patentansprüche

1. Verfahren zur Reduzierung der Schaumbildung beim Behandeln einer Dispersion oder Flüssigkeit mit Wasserdampf durch
a) Einleitung von Wasserdampf in den unteren Bereich einer Kolonne und gleichzeitiges Einspeisen eines Mediums am Kopf der Kolonne, wobei der Wasserdampf zum Kopf der Kolonne aufsteigt,
b) Kontaktieren des Mediums mit dem Wasserdampf unter Schaumbildung,
**dadurch gekennzeichnet, daß** das in Stufe a) eingespeiste Medium durch Mischen der Dispersion oder Flüssigkeit mit Wasserdampf in einer Apparatur erzeugt wurde, wobei dieses bei der Einspeisung in den Kopf der Kolonne eine höhere Temperatur aufweist, als die Temperatur des Wasserdampfs, der in Stufe b) mit dem Medium in Kontakt tritt.

2. Verfahren nach Anspruch 1, **dadurch gekennzeichnet, daß** die eingesetzte Kolonne nach dem Prinzip einer Gegenstromkolonne arbeitet.

3. Verfahren nach Anspruch 1 oder 2, **dadurch gekennzeichnet, daß** in dem oberen Teil der eingesetzten Kolonne der Druck reduziert ist.

4. Verfahren nach einem der Ansprüche 1 bis 3, **dadurch gekennzeichnet, daß** die Dispersions/Wasserdampf-Mischung oder Flüssigkeits/Wasser-dampf-Mischung durch eine Düse in den Kopf der Kolonne eingespeist wird.

5. Verfahren nach einem der Ansprüche 1 bis 4, **dadurch gekennzeichnet, daß** die Dispersions/Wasserdampf-Mischung oder die Flüssigkeits/Wasser-dampf-Mischung bei der Einspeisung in den Kopf der Kolonne eine um 5°C bis 10°C höhere Temperatur aufweist, als die Temperatur des Wasserdampfs, der mit der Dispersions/Wasserdampf-Mischung oder der Flüssigkeits/Wasserdampf-Mischung in Kontakt tritt.

6. Verfahren nach einem der Ansprüche 1 bis 5, **dadurch gekennzeichnet, daß** als Apparatur ein rohrförmiger Mischbehälter verwendet wird.

7. Verfahren nach einem der Ansprüche 1 bis 6, **dadurch gekennzeichnet, daß** beim Vermischen der Dispersion oder Flüssigkeit mit Wasserdampf in der Apparatur die Dispersion oder Flüssigkeit direkt mit dem Wasserdampf aufgeheizt wird.

8. Verfahren nach einem der Ansprüche 1 bis 7, **dadurch gekennzeichnet, daß** der Wasserdampf der Apparatur über eine Ringspaltdüse zugeführt wird.

9. Verfahren nach einem der Ansprüche 1 bis 8, **dadurch gekennzeichnet, daß** in der Apparatur der eingeleitete Wasserdampf gleichmäßig verteilt wird.

10. Verfahren nach Anspruch 9, **dadurch gekennzeichnet, daß** in der Apparatur zur gleichmäßigen Verteilung Lochscheiben vorgesehen sind.

11. Verfahren nach Anspruch 10, **dadurch gekennzeichnet, daß** in der Apparatur nach Verteilung des Wasserdampfs in der zulaufenden Dispersion oder Flüssigkeit ein Staudruck aufgebaut wird.

## Claims

1. A process for reducing the foam formation when a dispersion or liquid is treated with steam by
a) introduction of steam into the lower region of a column and simultaneous feed of a medium at the top of the column, the steam ascending to the top of the column,
b) contacting the medium with the steam, with foam formation,
which comprises the medium fed in stage a) having been generated by mixing the dispersion or liquid with steam in an apparatus, this medium during the feed into the top of the column having a higher temperature than that of the steam which comes into contact with the medium in stage b).

2. A process as claimed in claim 1, wherein the column used operates according to the principle of a countercurrent column.

3. A process as claimed in claim 1 or 2, wherein the pressure is reduced in the upper part of the column used.

4. A process as claimed in one of claims 1 to 3, wherein the dispersion/steam mixture or liquid/steam mixture is fed into the top of the column through a nozzle.

5. A process as claimed in one of claims 1 to 4, wherein the dispersion/steam mixture or the liquid/steam mixture, during the feed into the top of the column, has a temperature which is higher by from 5°C to 10°C than that of the steam which comes into contact with the dispersion/steam mixture or the liquid/steam mixture.

6. A process as claimed in one of claims 1 to 5, wherein the apparatus used is a tubular mixing vessel.

7. A process as claimed in one of claims 1 to 6, wherein, during the mixing of the dispersion or liquid with steam in the apparatus, the dispersion or liquid is heated directly with the steam.

8. A process as claimed in one of claims 1 to 7, wherein the steam is fed to the apparatus via a ring-gap nozzle.

9. A process as claimed in one of claims 1 to 8, wherein the steam introduced is distributed uniformly in the apparatus.

10. A process as claimed in claim 9, wherein perforated disks are provided in the apparatus for the uniform distribution.

11. A process as claimed in claim 10, wherein, after the steam is distributed in the influent dispersion or liquid, a backpressure is built up in the apparatus.

## Revendications

1. Procédé de réduction de la formation de mousse lors du traitement d'une dispersion ou d'un liquide avec de la vapeur d'eau, par
a) introduction de vapeur d'eau dans la zone inférieure d'une colonne, et simultanément injection d'un fluide en tête de la colonne, la vapeur d'eau montant vers la tête de la colonne,
b) mise en contact du fluide avec la vapeur d'eau, avec formation de mousse,
**caractérisé en ce que** le fluide injecté dans l'étape a) est produit dans un appareillage par mélange de la dispersion ou du liquide avec de la vapeur d'eau, cette vapeur d'eau ayant, lors de l'injection en tête de la colonne, une température plus élevée que la température de la vapeur d'eau qui entre en contact dans l'étape b) avec le fluide.

2. Procédé selon la revendication 1, **caractérisé en ce que** la colonne utilisée travaille selon le principe d'une colonne à contre-courant.

3. Procédé selon la revendication 1 ou 2, **caractérisé en ce que** la pression est réduite dans la partie supérieure de la colonne utilisée.

4. Procédé selon l'une des revendications 1 à 3, **caractérisé en ce que** le mélange dispersion/vapeur d'eau ou le mélange liquide/vapeur d'eau est injecté en tête de la colonne par une buse.

5. Procédé selon l'une des revendications 1 à 4, **caractérisé en ce que** le mélange dispersion/vapeur d'eau ou le mélange liquide/vapeur d'eau présente, lors de son injection en tête de la colonne, une température de 5 à 10°C plus élevée que la température de la vapeur d'eau qui entre en contact avec le mélange dispersion/vapeur d'eau ou avec le mélange liquide/vapeur d'eau.

6. Procédé selon l'une des revendications 1 à 5, **caractérisé en ce qu'**on utilise en tant qu'appareillage un récipient mélangeur tubulaire.

7. Procédé selon l'une des revendications 1 à 6, **caractérisé en ce que**, lors du mélange de la dispersion ou du liquide avec de la vapeur d'eau dans l'appareillage, la dispersion ou le liquide est directement chauffé avec la vapeur d'eau.

8. Procédé selon l'une des revendications 1 à 7, **caractérisé en ce que** la vapeur d'eau est envoyée à l'appareillage par une buse à fente annulaire.

9. Procédé selon l'une des revendications 1 à 8, **caractérisé en ce que** la vapeur d'eau introduite est uniformément distribuée dans l'appareillage.

10. Procédé selon la revendication 9, **caractérisé en ce que** des disques perforés sont prévus dans l'appareillage pour assurer une distribution uniforme.

11. Procédé selon la revendication 10, **caractérisé en ce qu'**une pression dynamique se constitue dans l'appareillage après distribution de la vapeur d'eau dans la dispersion ou dans le liquide entrant.
